Europäisches Patentamt

European Patent Office

Office européen des brevets

(11) Veröffentlichungsnummer: **0 131 827**
**B1**

(12) **EUROPÄISCHE PATENTSCHRIFT**

(45) Veröffentlichungstag der Patentschrift: **31.10.90**

(21) Anmeldenummer: **84107600.3**

(22) Anmeldetag: **30.06.84**

(51) Int. Cl.⁵: **C 03 C 17/25,** B 05 D 5/12,
B 05 D 1/18, C 23 C 18/12,
H 01 C 7/00, H 05 B 3/26,
H 01 L 31/18, H 01 B 5/14

(54) Tauchverfahren zur Herstellung transparenter, elektrisch leitfähiger, dotierter Indiumoxidschichten.

(30) Priorität: **08.07.83 DE 3324647**

(43) Veröffentlichungstag der Anmeldung:
**23.01.85 Patentblatt 85/04**

(45) Bekanntmachung des Hinweises auf die
Patenterteilung:
**31.10.90 Patentblatt 90/44**

(84) Benannte Vertragsstaaten:
**BE CH FR GB IT LI NL**

(56) Entgegenhaltungen:
**CH-A- 353 049**
**DE-A-1 811 158**
**DE-B-2 233 595**
**US-A-4 252 841**

(73) Patentinhaber: **Schott Glaswerke**
**Hattenbergstrasse 10**
**D-6500 Mainz (DE)**

㊙ **BE CH FR IT LI NL**

(73) Patentinhaber: **Carl-Zeiss-Stiftung trading as**
**SCHOTT GLASWERKE**
**Hattenbergstrasse 10**
**D-6500 Mainz 1 (DE)**

㊙ **GB**

(72) Erfinder: **Arfsten, Nanning, Dr.**
**Wingertspfad 3**
**D-6094 Bischofsheim (DE)**
Erfinder: **Kaufmann, Reinhard**
**Hafenstrasse 16**
**D-6500 Mainz (DE)**
Erfinder: **Schubert, Doris**
**Wiesenstrasse 16**
**D-6501 Budenheim (DE)**

(74) Vertreter: **Dr. Fuchs, Dr. Luderschmidt Dipl.-**
**Phys. Seids, Dr. Mehler Patentanwälte**
**Abraham-Lincoln-Strasse 7**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf ein "Tauchverfahren zur Herstellung transparenter, elektrisch leitfähiger, dotierter Indiumoxidschichten".

Das Interesse an transparenten, leitfähigen Oxidschichten ist groß für Zwecke der Wärmereflexion, für Displays, zum Heizen (z.B. Antifogging) und vieles andere mehr. Oxidschichten zeichnen sich gegenüber Metallschichten durch wesentlich erhöhte Stabilität und damit Eignung zum Außeneinsatz aus. Unter den bekannten Oxidschichten wie z.B. fluordotiertes Zinnoxid, antimondotiertes Zinnoxid, Cadmiumstannat zeichnet sich dotiertes Indiumoxid durch sehr große Leitfähigkeiten bei hoher Transmission aus. Nach dem bekannten Stand der Technik wird Indiumoxid mit Zinnoxid dotiert.

So beschreibt US—PS 4,252,841 die Herstellung von Indium-Zinn-Oxid-Schichten (ITO)-Schichten) durch Eintauchen eines Gegenstandes in ein organisches Lösungsmittel, das Indium- und Zinn-β-Diketon-Chelateverbindungen enthält. Nach dem Trocknen des Gegenstandes wird die ITO-Schicht durch Calcinierung erzeugt. Die gebildete ITO-Schicht hat einen verhältnismäßig hohen Widerstand von ca. 1,5 KΩ/□.

Nach der DE—OS 18 11 158 ist ein weiteres Tauchverfahren zur Erzeugung von Oxidschichten bekannt, wobei diese Oxidschichten jedoch keine elektrische Leitfähigkeit oder bestenfalls Halbleitereigenschaften aufweisen.

Die CH—A 353049 beschreibt die Aufbringung einer Indiumoxidschicht, dotiert mit Phosphor, Germanium und/oder Tellur, durch Tauchen oder Besprühen eines 400 bis 500°C heißen Gegenstandes mit einer organischen Indiumchloridlösung. Dieses Verfahren erfordert einen hohen Sicherheitsaufwand bezüglich der leicht brennbaren organischen Lösungsmittel und des verdampfenden giftigen Indiumchlorids.

Aus der DE—B 2233595 ist noch ein Sprühverfahren bekannt, nach dem elektrisch nicht leitende Metalloxid-Überzüge unter Verwendung aprotischer Lösungsmittel hergestellt werden. Auch andere Dotierungsmittel sind für im Vakuum- und Sprühverfahren hergestellte In₂O₃-Schichten bekannt geworden wie In₂O₃ dotiert mit Cd, Sb, Ti, Zr und Fluor (R. Groth, phys. stat. sol *14* 69 (1966)), haben jedoch keinen Eingang in die Praxis gefunden.

Entscheidend für die Qualität und die Wirtschaftlichkeit dotierter Indiumoxidschichtet ist vor allem auch das Verfahren der Aufbringung. Bekannt sind die im allgemeinen hohe Investitionen erfordernden Vakuumverfahren. Die ebenfalls bekannten Sprüh- und CVD-Verfahren verbrauchen viel Material, das nicht in Schicht umgesetzt wird und kostspielig aufgearbeitet werden muß, ganz besonders im Falle des teuren Indiums. Beim Cadmium ist das Problem der Toxizität erheblich. Das Tauchverfahren hat diese Nachteile nicht und ist daher vorzuziehen. Im Falle des zinndotierten Indiumoxids hat es jedoch mit den anderen Verfahren den Nachteil gemeinsam, daß zur Erzielung optimaler, elektrischer und optischer Eigenschaften während des Aufbringverfahrens oder hinterher eine spezielle, reduzierende Gasatmosphäre bei hoher Temperatur eingesetzt werden muß. Das führt häufig zu der Notwendigkeit, nicht-katalytische Wandmaterialien verwenden zu müssen, um anteilige H₂-Verbrennungen aus dem Reduktionsgas zu verhindern. Außerdem sind gasdichte Öfen bei hoer Temperatur erforderlich.

Ein weiterer Nachteil der Verfahren nach dem Stande der Technik ist, daß die dotierten Indiumoxidschichten nicht auf beliebige Substrate direkt aufgebracht werden können, insbesondere nicht auf das interessanteste Substrat, nämlich alkalihaltiges Floatglas, da die in die Indiumoxidschicht eindiffundierenden Nalonen die Leitfähigkeit von Indiumoxidschichten gemäß dem Stand der Technik in nicht zuträglichem Ausmaß herabsetzen.

Ziel der vorliegenden Erfindung ist daher ein Verfahren, welches die Nachteile der bekannten Verfahren nicht aufweist. Dieses Ziel wird mit einem Verfahren gemäß den Patentansprüchen erreicht, insbesondere durch Verwendung einer Indiumoxidtauchlösung, die bereits Hydrolyseprodukte der verwendeten Verbindungen enthält.

Eingesetzt werden hydrolysierbare Verbindungen des Indiums zusammen mit hydrolysierbaren Verbindungen der 2, 4 oder 5 Hauptgruppe und der 1, 2, 4, 5, oder 8. Nebengruppe und der Seltenen Erden: z.B. Ag, Au, Cu, Ca, Mg, La, Sn, Nb, Rh, Os, Ir, Ta, Pt, Hf, Hg, As, Bi, Sb, Zn, Cd, Y, Si, Ti, Zr, Pb, Ge, Co, Pd, Ce, Nd, Ru, V, Fe, in alkoholischer Lösung, ggf. mit Zusätzen von Chelatbildnern wie Acetylaceton, Acetessigsäureethylester, Carbonsäuren, Polycarbonsäuren, Polyalkoholen wie Glykol und Glycerin, Hydroxyketonen, Ketonen, Aldehyden, aliphatischen, und aromatischen Kohlenwasserstoffen, aliphatischen und aromatischen Amine wie Pyridin, α-Picolin, Triäthylamin, Äthanolamine, Harnstoff und Urotropin.

Die hydrolysierbaren Verbindung sind z.B. Alkoxide, Nitrate, Salze organischer Säuren wie Acetate, Chelate wie z.B. Acetylacetonate, usw.

Die Herstellung solcher Lösungen ist einfach und wesentlich billiger als die Herstellung von Zwei- oder Mehrkomponententargets für ein Sputterverfahren. Die Einhaltung einer gewünschten Zusammensetzung oder Stöchiometrie der Schicht ist — ebenfalls im Gegensatz zu Vakuumverfahren — auch bei 2- und mehrkomponentigen Systemen einfach und zuverlässig, vermutlich weil eine Reaktion der Partner bereits ion Lösung oder spätestens während der Schichtbildung eintritt.

In eine solche Lösung, die Hydrolyseprodukte der eingesetzten Verbindungen enthält, wird das Substrat, z.B. eine Glasscheibe auf bekannte Art und Weise eingetaucht, gleichmäßig herausgezogen in eine Temperatur- und Feuchte-konditionierte Atmosphäre und abschließend an Luft auf 400—500°C erhitzt. Als Substrate eignen sich alle Gläser, insbesondere auch die alkalihaltigen Floatgläser, Kieselglas, Glaskeramiken, Glimmer, sowie Metalle wie Kupfer, Eisen und andere.

Die Lösungen gemäß der Erfindung zeigen vorteilhafterweise eine ausgezeichnete Benetzung der Substrate, die sogar besser ist als bei vielen der bekannten Tauchlösungen für die Glasbeschichtung.

Als besonder vorteilhaft gemäß der Erfindung haben sich die cadmiumhaltigen Indiumlösungen erwiesen, wobei die Dotierung von $In_2O_3$-Schichten mit CdO über 4 Zehnerpotenzen variiert werden kann.

Bei Zusätzen von > 1 mol % CdO bezogen auf $In_2O_3$ erreichen die Schichten beim Erhitzen auf 500°C an Luft auch auf alkalihaltigem Floatglas ihre volle Leitfähigkeit von < 500 $\Omega/\square$.

Dies ist ein für Tauchschichten überraschender Befund, weil Alkalien bei 500°C gut diffundieren.

Bei niedrigeren CdO-Gehalten und bei Schichten, die bei Temperaturen unter 500°C hergestellt werden, kann die Leitfähigkeit nachträglich durch eine sehr einfache Nachformierung verbessert werden. Sehr einfach und damit wirtschaftlich ist dies, weil es in einer nicht streng eingestellten und nicht konstant zu haltenden Formiergasatmosphäre bei 200—350°C in einfachen Öfen, die nicht dicht sein müssen, erfolgen kann. Es entfallen im Vergleich zum Stand der Technik die gasdichten Öfen und das darin befindliche Transportsystem, ebenso die speziellen, nicht katalytischen Wandmaterialien. Die Nachformierung ist besonders vorteilhaft für Dünngläser, z.B. von 0,5 mm, weil diese ohne Verwerfung nicht auf 500°C zu erhitzen sind. Solche Gläser werden für Displays verwandt, wobei die gewünschten Flächenwiderstände gerade in dem Gebiet von 200 bis 500 $\Omega/\square$ liegen, die das Verfahren gemäß der Erfindung liefert. Die so hergestellten Schichten sind mit verdünnter Salzsäure ätzbar, eine an Displayschichten gestellte Forderung.

Mit CdO dotierte $In_2O_3$-Schichten sind bereits im Sprühverfahren auf heiße Glasplatten aufgebracht worden (R. Groth, phys. stat. sol *14* 69 (1966)). Eine 1,5% CdO enthaltende $In_2O_3$-Schicht hatte eine Elektronenkonzentration von $3 \times 10^{19}$ $cm^{-3}$ und eine Beweglichkeit von 6 $cm^2V^{-1}s^{-1}$ und ist damit Schichten gemäß der Erfindung mit $3,3 \times 10^{20}$ $cm^{-3}$ und 16 $cm^2V^{-1}s^{-1}$ weit unterlegen. Davon abgesehen haben im Sprühverfahren erzeugte Schichten nicht die erforderliche Homogenität, und der Verlust an Sprühmaterial, das nicht in Schicht umgesetzt wird, ist unwirtschaftlich. Die Probleme mit den toxischen Cd-Verbindungen sind beim Sprühverfahren erheblich, nicht jedoch beim Tauchverfahren, bei dem die Lösung sich nicht in den freien Raum verteilt, sondern nur auf dem Substrat bleibt. Die Dampfdrücke der verwendeten Cd-Verbindungen sind niedrig; die MAK-Werte werden eingehalten.

Im Sputterverfahren wurden (R. Groth, phys. stat. sol *14* 69 (1966)) Schichten aus CdO, dotiert mit 5 Atomprozent Indium, hergestellt, die bei einer Schichtdicke von 281 nm eine Beweglicht von 2,3 $cm^2V^{-1}s^{-1}$ und eine spezifische Leitfähigkeit von 189 $\Omega^{-1}cm^{-1}$ aufweisen. Dies entspricht einem Flächenwiderstand von 188 $\Omega/\square$ und ist im Vergleich ebenfalls den Schichten gemäß der Erfindung unterlegen.

Die neueste Literaturstelle (G. Haake, SPIE Vol. 324 Optical Coatings for Energy Efficiency and Solar Applications (1982)) berichtet von $CdIn_2O_4$-Schichten (RF-Sputterverfahren) mit einer Leitfähigkeit von 3 000—4 500 $\Omega^{-1}cm^{-1}$, die ausgezeichnet wäre. Das Fehlen weiterer Daten wie Ladungsträgerkonzentration, Beweglichkeit, Schichtdicke verhindern einen genaueren Vergleich mit Schichten gemäß der Erfindung. Überdies sind diese $CdIn_2O_3$-Schichten nur auf Kieselglas beschrieben.

Überraschend beim Verfahren gemäß der Erfindung ist u.a. der Befund, daß sich direkt auf alkalihaltigem Glas Schichten mit guter Leitfähigkeit bilden. Dies scheint eine, noch nicht erklärbare Eigenschaft der Schichtzusammensetzung gemäß der Erfindung zu sein, die insbesondere bei Cd-haltigen, $In_2O_3$-Schichten beobachtet wird. Dies ist ein beachtlicher technischer Fortschritt, da bei dem am häufigsten als Substrat verwendeten alkalihaltigem Glas wegen der Alkalidiffusion nach dem Stand der Technik stets zunächst eine Alkalisperrschicht, z.B. aus $SiO_{29}$, aufgebracht werden mußte. Deren Wegfall ist ein erheblicher wirtschaftlicher Vorteil.

Aber auch die anderen Dotierungsstoffe weisen spezifische, bisher nie beobachtete Eigenschaften auf. So können Indiumoxidschichten, die mit Silber, Gold, Kupfer, Palladium, Ruthenium, Rhodium und Platin dotiert wurden, als Cermet-Schicht bezeichnet werden. Z.b. kann eine mit Palladium dotierte Indiumoxidschicht, entsprechend eingebaut, als Gassensor Verwendung finden, besonders für Wasserstoff, Sauerstoff, Stickstoff, Alkohol und Wasser. Die Ansprechselektivität der Schicht hängt von der Temperatur ab; z.B. für die Sauerstoffmessung sollte die Temperatur der Schicht 120—150°C betragen, wohingegen bei Äthanolkonzentrationsmessungen an Luft eine Temperatur von 25—50°C ausreicht. Ein besonderer Vorteil ergibt sich durch die bei der Tauchbeschichtung zwangsläufig anfallende beidseitige Beschichtung. Die kontaktierte Oberseite arbeitet entsprechend verstärkt als Sensor, wohingegen die Unterseite zur Aufheizung des Substrats aufgrund seines geeigneten Widerstandes dienen kann. Bei einer angelegten Spannung von 80 Volt fließt normalerweise ein Strom von ca. 200—500 Milliampere, je nach Flächenwiderstand der Schicht. Das reicht aus, um Substrattemperaturen von 50—250°C zu erreichen. In diesem Temperaturbereich verändert die Schicht ihre Eigenschaften, z.B. den Flächenwiderstand praktisch nicht. U.a. zeigen auch $In_2O_3$-Schichten, die mit Cd, Pt, Rh, Ru, Zn und Ag dotiert werden, ausgezeichnete Sensoreigenschaften gegenüber den unterschiedlichsten Gasen, wie gesättigten und ungesättigten Kohlenwasserstoffen, Stickoxiden, Schwefeldioxyd, Kohlenmonoxyd, Alkoholen, Wasserstoff, u.a.

Mit Titandioxid dotierte Indiumoxidschichten besitzen eine erstaunliche Beständigkeit gegenüber konzentrierten Säuren. Es ist bekannt, daß Indiumoxid- bzw. mit Zinn dotierte Indiumoxidschichten in Säuren verhältnismäßig leicht löslich sind. Mit Titandioxid dotierte Indiumoxidschichten dagegen lösen sich selbst nach Stunden weder in verdünnten noch in konzentrierten Säuren wie Salzsäure, Salpetersäure und Schwefelsäure auf. Solche Schichten stellen ideale transparente elektrisch leitfähige Elektroden für die Anwendung in aggressiven Medien dar.

Mit Calcium dotierte Schichten zeichnen sich durch eine besonders hohe Härte aus.

Die Erfindung wird durch die nachfolgenden Beispiele näher erläutert:

Vergleichsbeispiel
a) Herstellung einer Indiumoxidtauchlösung

26,5 g Indium-III-nitrat werden in einem Gemisch aus 16 ml Wasser und 14 ml Essigsäure gelöst und mit Äthanol auf 200 ml verdünnt.
b) Herstellung einer Indiumoxidschicht

In eine wie unter Beispiel a) hergestellte Indiumoxidtauchlösung, wird eine Borosilicatglasscheibe (Tempax) getaucht und anschließend mit einer konstanten Geschwindigkeit (0,6 cm pro Sekunde) herausgezogen. Die Platte wird kurz bei 250°C vorgetrocknet und in einer Stickstoff/Wasserstoff-Atmosphäre auf 400°C aufgeheizt und sofort wieder abgekühlt.

Eine so hergestellte Schicht besitzt folgende Eigenschaften:

| | |
|---|---|
| Schichtdicke: | 61 nm |
| Flächenwiderstand: | 432 $\Omega/\square$ |
| Leitfähigkeit: | 379 cm$^{-1}$ |
| Ladungsträgerkonzentration: | 7,5 × 10$^{19}$ cm$^{-3}$ |
| Beweglichkeit: | 31 cm$^2$V$^{-1}$s$^{-1}$. |

Beispiel 1
a) Herstellung einer mit Cadmiumoxid dotierten Indiumoxidtauchlösung

Eine wie im Vergleichsbeispiel hergestellte Indiumoxidtauchlösung wird mit 5 g Cadmiumacetat (Cd(OOCCH$_3$)$_2$ × 2H$_2$O) unter Rühren versetzt und mit 40 ml Äthanol weiter verdünnt.
b) Herstellung einer mit Cadmiumoxid dotierten Indiumoxidschicht an Luft bei 500°C

In eine wie im Vergleichsbeispiel hergestellte Tauchlösung wird eine 2 mm dicke Floatglasscheibe getaucht und mit konstanter Geschwindigkeit herausgezogen. Nach 2minütigem Trocknen bei 250°C wird die beschichtete Scheibe an Luft auf 500°C aufgeheizt und bei dieser Temperatur 5 Minuten gehalten. Nach dem Abkühlen weist die Schicht folgende Eigenschaften auf:

| | |
|---|---|
| Schichtdicke | 60 nm |
| Flächenwiderstand: | 194 $\Omega/\square$ |
| Leitfähigkeit: | 830 $\Omega^{-1}$cm$^{-1}$ |
| Beweglichkeit: | 16 cm$^2$V$^{-1}$s$^{-1}$ |
| Ladungsträgerkonzentration: | 3,3 × 10$^{20}$ cm$^{-3}$ |
| Transmission (550 nm): | ≃80% |
| Reflexion (550 nm): | ≃17% |

Beispiel 2
Herstellung einer mit Cadmiumoxid dotierten Indiumoxidschicht an Luft bei 430°C mit anschließendem Nachformieren bei 250°C

In eine wie unter Beispiel 1 hergestellte Tauchlösung wird eine 0,7 mm dicke Dünnglasscheibe getaucht und mit konstanter Geschwindigkeit herausgezogen. Nach 2minütigem Vortrocknen bei 250°C wird die beschichtete Scheibe an Luft auf 430°C aufgeheizt und sofort wieder abgekühlt. Anschließend wird die beschichtete Glasscheibe bei 250°C 5—10 Minuten in einer Formiergasatmosphäre nachbehandelt. Der Flächenwiderstand vor dem Formieren beträgt ca. 800—1 200 $\Omega/\square$, nachher besitzt die Schicht einen Flächenwiderstand von 200—300 $\Omega/\square$.

Beispiel 3
a) Herstellung einer niedrig mit Cadmiumoxid dotierten Indiumoxidtauchlösung

Eine wie im Vergleichsbeispiel hergestellte Indiumoxidtauchlösung wird mit 1,5 g Cadmiumacetat (Cd(OOCCH$_3$)$_2$ × 2H$_2$O) unter Rühren versetzt.
b) Herstellung einer niedrig mit Cadmiumoxid dotierten Indiumoxidschicht

Die Herstellung der Schicht erfolgt wie in Beispiel 1b) beschrieben. Der Flächenwiderstand einer solchen Schicht beträgt > 500 K$\Omega$.

Wird eine solche Schicht in einer Formiergasatmosphäre auf 400°C aufgeheizt und anschließend sofort abgekühlt, so hat sie einen Flächenwiderstand von 450 $\Omega/\square$.

Beispiel 4
a) Herstellung einer mit Zinkoxid dotierten Indiumoxidtauchlösung

In eine wie im Vergleichsbeispiel hergestellte Indiumoxidtauchlösung werden 5,7 g Zinknitrat (Zn(NO$_3$)$_2$·4H$_2$O) unter Rühren gelöst und mit 250 ml Äthanol verdünnt.
b) Herstellung einer mit Zinkoxid dotierten Indiumoxidschicht

Eine Borosilicatglasscheibe wird in die wie in Beispiel 4a) hergestellt Tauchlösung getaucht und mit konstanter Geschwindigkeit herausgezogen. Nach 5minütigem Trocknen bei 250°C wird die beschichtete Scheibe an Luft auf 450°C aufgeheizt und sofort abgekühlt. Anschließend wird die Probe bei 350°C 10 Minuten in einer Formiergasatmosphäre getempert. Eine so hergestellte Schicht weist folgende Eigenschaft auf:

| | |
|---|---|
| Schichtdicke: | 90 nm |
| Flächenwiderstand: | 343 $\Omega/\square$ |
| Ladungsträgerkonzentration: | 1,6 × 10$^{20}$ cm$^{-3}$ |
| Beweglichkeit: | 13 cm$^2$V$^{-1}$s$^{-1}$ |
| Leitfähigkeit: | 330 $\Omega^{-1}$cm$^{-1}$. |

Beispiel 5
a) Herstellung einer mit Palladium dotierten Indiumoxidtauchlösung

In eine wie im Vergleichsbeispiel hergestellte Indiumoxidtauchlösung werden 1 g Palladium(II)-acetylacetonat unter Rühren gelöst.

b) Herstellung einer mit Palladium dotierten Indiumoxidschicht

Eine Borosilicatglasscheibe wird in eine wie in Beispiel 5a) beschriebenen Tauchlösung getaucht und mit konstanter Geschwindigkeit herausgezogen. Die Probe wird auf 500°C an Luft aufgeheizt und sofort wieder abgekühlt. Die Schicht besitzt einen Flächenwiderstand von 1,6 K$\Omega$. Nach dem Formieren 5 Minuten bei 400°C besitzt die Schicht einen Flächenwiderstand von 300 $\Omega/\square$.

### Beispiel 6

a) Herstellung einer mit Titandioxid dotierten Indiumoxidtauchlösung

Eine wie im Vergleichsbeispiel hergestellte Indiumoxidtauchlösung wird mit 9 g Titantetraethylat, gelöst in 30 ml Äthanol und 20 ml Essigsäure, versetzt.

b) Herstellung einer mit Titandioxid dotierten Indiumoxidschicht

Eine Borosilicatglasscheibe wird langsam in eine wie in Beispiel 6a) hergestellte Tauchlösung getaucht und mit konstanter Geschwindigkeit herausgezogen. Die Schicht wird 10 Minuten bei 250°C getrocknet und bei 500°C 10 Minuten an Luft getempert. Eine solche Schicht besitzt einen Flächenwiderstand von ca. 2 M$\Omega/\square$. Nach 15minütigem Tempern bei 450°C in einer Formiergasatmosphäre besitzt die Schicht einen Flächenwiderstand von 630 $\Omega/\square$. Diese Schicht hat eine sehr gute Beständigkeit gegenüber konzentrierten Säuren/Basen.

### Beispiel 7

a) Herstellung einer mit Zirkondioxid dotierten Indiumoxidtauchlösung

Eine wie im Vergleichsbeispiel hergestellte Indiumoxidtauchlösung wird mit 5 g Zirkontetrabutylat, gelöst in 5 ml Essigsäure und 20 ml Äthanol, versetzt.

b) Herstellung einer mit Zirkondioxid dotierten Indiumoxidschicht

Eine Borosilicatglasscheibe wird langsam in eine wie in Beispiel 7a) hergestellte Tauchlösung getaucht und mit konstanter Geschwindigkeit herausgezogen. Die Schicht wird 2 Minuten bei 250°C getrocknet, auf 500°C aufgeheizt und sofort wieder abgekühlt.

Eine solche Schicht besitzt einen Flächenwiderstand von > 5 M$\Omega$. Nach dem Aufheizen in einer Formiergasatmosphäre bis 400°C und sofortigem Abkühlen besitzt eine solche Schicht einen Flächenwiderstand von 50 $\Omega/\square$.

### Beispiel 8

a) Herstellung einer mit Magnesiumoxid dotierten Indiumoxidtauchlösung

Eine wie im Vergleichsbeispiel hergestellte Indiumoxidtauchlösung wird mit 1,3 g Magnesiumnitrat ($Mg(NO_3)_2 \times 2H_2O$) versetzt und mit 50 ml Äthanol verdünnt.

b) Herstellung einer mit Magnesiumoxid dotierten Indiumoxidschicht

Eine Borosilicatglasscheibe wird langsam in eine, wie in Beispiel 8a) hergestellt, Tauchlösung getaucht und mit konstanter Geschwindigkeit herausgezogen. Die Schicht wird 5 minuten bei 250°C getrocknet und in einer Formiergasatmosphäre 15 Minuten bei 500°C getempert. Eine so hergestellte Schicht besitzt einen Flächenwiderstand von 2,2 K$\Omega/\square$.

### Beispiel 9

a) Herstellung einer mit Calciumoxid dotierten Indiumoxidtauchlösung

Eine wie im Vergleichsbeispiel hergestellte Indiumoxidtauchlösung wird mit 1,4 g Calciumnitrat ($Ca(NO_3)_2 \times 2H_2O$) und 100 ml Äthanol verdünnt.

b) Herstellung einer mit Calciumoxid dotierten Indiumoxidschicht

Eine Borosilicatglasscheibe wird langsam in eine wie in Beispiel 9a) hergestellte Tauchlösung getaucht und mit konstanter Geschwindigkeit herausgezogen. Die Schicht wird 5 Minuten bei 250°C getrocknet und in einer Formiergasatmosphäre 45 Minuten bei 500°C getempert. Eine so hergestellte Schicht besitzt einen Flächenwiderstand von 10—15 K$\Omega/\square$. Die mit Calciumoxiddotierten Indiumoxidschichten zeichnen sich durch eine außergewöhnliche Schichthärte aus.

### Beispiel 10

a) Herstellung einer mit Silber dotierten Indiumoxidtauchlösung

Eine wie im Vergleichsbeispiel hergestellte Indiumoxidtauchlösung wird mit 0,5 g Silbernitrat versetzt.

b) Herstellung einer mit Silber dotierten Indiumoxidschicht

Eine Borosilicatglasscheibe wird langsam in eine wie in Beispiel 10a) hergestellte Tauchlösung getaucht und mit konstanter Geschwindigkeit herausgezogen. Die Schicht wird 5 Minuten bei 250°C getrocknet und auf 450°C an Luft aufgeheizt. Nach dem Abkühlen wird die Schicht 5 Minuten bei 400°C in einer Formiergasatmosphäre getempert. Die Schicht besitzt einen Flächenwiderstand von 3 K$\Omega/\square$.

### Beispiel 11

a) Herstellung einer mit Neodymoxid dotierten Indiumoxidtauchlösung

Eine wie im Vergleichsbeispiel hergestellte Indiumoxidtauchlösung wird mit 3,9 g Neodym(III)acetylacetonat versetzt und mit 50 ml Äthanol verdünnt.

b) Herstellung einer mit Neodymoxid dotierten Indiumoxidschicht

Eine Borosilicatglasscheibe wird langsam in eine wie in Beispiel 11a) hergestellte Tauchlösung getaucht und mit konstanter Geschwindigkeit herausgezogen. Die Schicht wird 5 Minuten bei 250°C getrocknet und anschließend in einer Formiergasatmosphäre bis 400°C aufgeheizt. Nach dem Abkühlen besitzt eine solche Schicht einen Flächenwiderstand von 530 $\Omega/\square$.

### Beispiel 12

a) Herstellung einer mit Cadmiumoxid und Zinkoxid dotierten Indiumoxidtauchlösung

Eine wie im Vergleichsbeispiel hergestellte Indiumoxidtauchlösung wird mit 19,5 g Cadmiumacetat $(Cd(OOCCH_3)_2 \times 2H_2O)$ und 19,1 g Zinknitrat $(Zn(NO_3)_2 \times 4H_2O)$, gelöst in 23 ml Essigsäure und 22 ml Wasser, versetzt und mit 150 ml Äthanol versetzt.

b) Herstellung einer mit Cadmiumoxid und Zinkoxid dotierten Indiumoxidschicht

Eine Borosilicatglasscheibe wird langsam in eine wie im Beispiel 12a) hergestellte Tauchlösung getaucht und mit konstanter Geschwindigkeit herausgezogen. Die Schicht wird an Luft auf 500°C aufgeheizt. Eine so hergestellte Schicht hat einen Flächenwiderstand von 800 $\Omega/\square$.

### Beispiel 13

a) Herstellung einer mit Gold dotierten Indiumoxidtauchlösung

Eine wie im Vergleichsbeispiel hergestellte Indiumoxidtauchlösung wird mit 1,7 g Gold(III)chlorid und 0,5 g Zitronensäure versetzt.

b) Herstellung einer mit Gold dotierten Indiumoxidschicht

Eine Borosilicatglasscheibe wird langsam in eine wie in Beispiel 13a) hergestellte Tauchlösung getaucht und mit konstanter Geschwindigkeit herausgezogen. Die Schicht wird 5 Minuten bei 250°C getrocknet und bei 450°C 10 Minuten in einer Formiergasatmosphäre getempert. Eine solche Schicht besitzt eine Flächenwiderstand von 2,1 $K\Omega/\square$.

### Beispiel 14

a) Herstellung einer mit Bleioxid dotierten Indiumoxidtauchlösung

Eine wie im Vergleichsbeispiel hergestellte Indiumoxidtauchlösung wird 6 Blei(II)acetat $(Pb(COOCH_3)_2 \times 2H_2O)$, gelöst in 20 ml Glykol, versetzt und mit 150 ml Äthanol verdünnt.

b) Herstellung einer mit Bleioxid dotierten Indiumoxidschicht

Eine Borosilicatglasscheibe wird langsam in eine wie in Beispiel 14a) hergestellte Tauchlösung getaucht und mit konstanter Geschwindigkeit herausgezogen. Die Schicht wird 5 Minuten bei 250°C getrocknet und bei 400°C 5 Minuten in einer Formiergasatmosphäre getempert. Eine so hergestellte Schicht besitzt einen Flächenwiderstand von 1,8 $K\Omega$.

### Beispiel 15

a) Herstellung einer mit Kobaltoxid dotierten Indiumoxidtauchlösung

Eine wie im Vergleichsbeispiel hergestellte Indiumoxidtauchlösung wird mit 1,1 g Kobalt(II)-nitrat $(Co(NO_3)_2 \times 4H_2O)$ versetzt.

b) Herstellung einer mit Kobaltoxid dotierten Indiumoxidschicht

Eine Borosilicatglasscheibe wird langsam in eine wie in Beispiel 15a) hergestellte Tauchlösung getaucht und mit konstanter Geschwindigkeit herausgezogen. Die Schicht wird 10 Minuten bei 250°C getrocknet und bei 500°C 10 Minuten in einer Formiergasatmosphäre getempert. Eine solche Schicht besitzt einen Flächenwiderstand von 300 $K\Omega/\square$.

### Beispiel 16

a) Herstellung einer mit Vanadiumoxid dotierten Indiumoxidtauchlösung

Eine wie im Vergleichsbeispiel hergestellte Indiumoxidtauchlösung wird mit 2,3 g Vanadium-(IV)acetylacetonat und anschließend mit 0,5 ml Pyridin versetzt.

b) Herstellung einer mit Vanadium dotierten Indiumoxidschicht

Eine Borosilicatglasscheibe wird langsam in eine wie in Beispiel 16a) hergestellte Tauchlösung getaucht und mit konstanter Geschwindigkeit herausgezogen. Die Schicht wird 10 Minuten bei 250°C getrocknet und bei 500°C 10 Minuten in einer Formiergasatmosphäre getempert. Eine solche Schicht besitzt einen Flächenwiderstand von 15 $K\Omega/\square$.

### Beispiel 17

a) Herstellung einer mit Antimonoxid dotierten Indiumtauchlösung

Eine wie im Vergleichsbeispiel hergestellte Indiumoxidtauchlösung wird mit 2,4 g Antimon-(III)chlorid, gelöst in 10 ml Acetessigsäureäthylester, versetzt.

b) Herstellung einer mit Antimonoxid dotierten Indiumoxidschicht

Eine Borosilicatglasscheibe wird langsam in eine wie in Beispiel 17a) hergestellte Tauchlösung getaucht und mit konstanter Geschwindigkeit herausgezogen. Die Schicht wird 10 Minuten bei 250°C getrocknet und bei 500°C 10 Minuten in einer Formiergasatmosphäre getempert. Eine solche Schicht besitzt einen Flächenwiderstand 4,6 $K\Omega/\square$.

### Beispiel 18

a) Herstellung einer mit Ruthenium dotierten Indiumoxidtauchlösung

Eine wie im Vergleichsbeispiel hergestellte Indiumoxidtauchlösung wird mit 1,0 g Ruthenium(III)chlorid versetzt.

b) Herstellung einer mit Ruthenium dotierten Indiumoxidschicht

Eine Borosilicatglasscheibe wird langsam in eine wie in Beispiel 18a) hergestellte Tauchlösung getaucht und mit konstanter Geschwindigkeit herausgezogen. Die Schicht wird 10 Minuten bei 250°C getrocknet und bei 400°C 10 Minuten in einer Formiergasatmosphäre getempert. Eine so hergestellte Schicht besitzt einen Flächenwiderstand von 420 $\Omega/\square$.

### Patentansprüche

1. Verfahren zum Herstellen transparenter, elektrisch leitfähiger, dotierter Indiumschichten auf einem Substrat, bei dem eine Lösung, die aus hydrolysierbaren Verbindungen des Indiums und mindestens einer hydrolysierbaren Verbindung des oder der Dotierungsmittel(s) hergestellt ist, auf das Substrat aufgebracht und die Schicht durch Erhitzen bis 500°C durch Tempern gebildet wird, dadurch gekennzeichnet, daß eine bereits Hydrolyseprodukte der hydrolysierbaren Verbindungen des Indiums enthaltende Indiumoxidtauchlösung verwendet wird, welche als Dotierungsmittel mindestens eine hydrolysierbare Verbindung eines Elements der 2, 4 oder 5. Hauptgruppe der 1, 2, 4, 5 oder 8. Nebengruppe des Periodischen Systems der Elemente oder der Seltenen Erden enthält und das Substrat in die Tauchlösung eingetaucht, aus der Tauchlösung entnommen und danach erhitzt wird.

2. Verfahren nach Anspruch 1, dadurch gekennzeichnet, daß vor dem Erhitzen eine Trocknungsbehandlung erfolgt.

3. Verfahren nach Anspruch 1 oder 2, dadurch gekennzeichnet, daß als Indiumoxidtauchlösung eine mit Essigsäure oder Acetat versetzte, wässrige Lösung der hydrolysierbaren Verbindung des Indiums verwendet wird.

4. Verfahren nach Anspruch 3, dadurch gekennzeichnet, daß diese wässrige Lösung zusätzlich mit einem Alkohol verdünnt wird.

5. Verfahren nach Anspruch 4, dadurch gekennzeichnet, daß dieser Alkohol Ethanol ist.

6. Verfahren nach einem der vorstehenden Ansprüche, dadurch gekennzeichnet, daß Dotierungsmittel die Hauptgruppenelemente Mg, Ca, Si, Ge, Sn, Pb, Sb, Bi, As sowie die Nebengruppenelemente Cu, Ag, Au, Zn, Cd, Hg, Y, La, Ti, Zr, Hf, V, Nb, Ta, Fe, Ru, Os, Co, Rh, Ir, Ni, Pd, Pt, Ce und Nd sind.

7. Verfahren nach einem der vorstehenden Ansprüche, dadurch gekennzeichnet, daß die auf dem Substrat befindliche Schicht nach dem Tempern mittels eines Reduktionsgases bei Temperaturen von 200 bis 500°C nachbehandelt wird.

8. Verfahren nach einem der vorstehenden Ansprüche, dadurch gekennzeichnet, daß als hydrolysierbare Verbindung des Indiums Alkoxide, das Nitrat, Salze organischer Säuren und als Verbindungen der Dotierungsmittel Alkoxide, Nitrate, Chloride, Salze organischer Säuren und Chelate verwendet werden.

9. Verfahren nach einem der vorstehenden Ansprüche, dadurch gekennzeichnet, daß der Indiumoxidtauchlösung chelatbildende Verbindungen, wie Acetylaceton, Acetessigester, Carbonsäuren, Aldehyde, Polyalkohole wie Glykol oder Glycerin, Polycarbonsäuren, Ketone, Hydroxyketone oder aliphatische oder aromatische Kohlenwasserstoffe, aliphatische oder aromatische Amine, wie Pyridin, α-Picolin, Triäthylamin, Äthanolamin, Harnstoff, Urotropin zugesetzt werden.

10. Verwendung der dotierten Indiumoxidschichten gemäß den Ansprüchen 1 bis 10 in Displays und als Heizschichten oder Sensorschichten.

**Revendications**

1. Procédé pour la production de couches d'indium transparentes électroconductrices, dopées sur un substrat, dont une solution, étant préparée de composés hydrolysables d'indium et au moins d'un composé hydrolysable du ou des agent(s) de dopage, est appliquée sur le substrat et dont la couche est formée par caléfaction jusqu'à 500°C par recuit, caractérisé en ce qu'on utilise une solution à immersion, contenant déjà des produits d'hydrolyse des composés hydrolysables d'indium, qui contient, comme agent de dopage, au moins un composé hydrolysable d'un élément du groupe principale II, IV, ou V, du groupe secondaire I, II, IV ou VIII du tableau périodique des éléments ou des terres rares, et qu'on immerge le substrat dans la solution à immersion, le retire de la solution à immersion et, ensuite, le chauffe.

2. Procédé selon la revendication 1, caractérisé en ce qu'on accomplit un traitement à séchage avant la caléfaction.

3. Procédé selon la revendication 1 ou 2, caractérisé en ce qu'on utilise, comme solution à immersion d'indium, une solution aqueuse des composés hydrolysables, étant mélangée avec l'acide acétique ou l'acetate.

4. Procédé selon la revendication 3, caractérisé en ce qu'on dilue ladite solution aqueuse avec un alcool, au surplus.

5. Procédé selon la revendication 4, caractérisé en ce que ledit alcool est l'éthanol.

6. Procédé selon l'une quelconque des revendications précédentes, caractérisé en ce que les agents de dopage sont les éléments de groupe principal Mg, Ca, Si, Ge, Sn, Pb, Sb, Bi, As, aussi que les éléments de groupe secondaire Cu, Ag, Au, Zn, Cd, Hg, Y, La, Ti, Hf, V, Nb, Ta, Fe, Ru, Os, Co, Rh, Ir, Ni, Pa, Pt, Ce et Nd.

7. Procédé selon l'une quelconque des revendications précédentes, caractérisé en ce qu'après le recuit, on retraite la couche, étant située sur le substrat, au moyen d'un gaz réducteur par de températures de 200 à 500°C.

8. Procédé selon l'une quelconque des revendications précédentes, caractérisé en ce qu'on utilise, comme composés hydrolysables d'indium, des alkoxydes, le nitrate, des sels d'acides organiques et, comme composés des agents de dopage, des alkoxydes, des nitrates, des chlorures, des sels d'acides organiques et des chélates.

9. Procédé selon l'une quelconque des revendications précédentes, caractérisé en ce qu'on ajoute à la solution à immersion d'indium des composés, formant des chélates comme l'acétylacétone, l'ester acétylacétique, des acides carboxyliques, des aldéhydes, des polyalcools comme le glycol ou la glycérine, des acides polycarboxyliques, des cétones, des hydroxycétones, ou des hydrocarbures aliphatiques ou aromatiques, des amines aliphatiques ou aromatiques comme la pyridine, l'α-picoline, la triéthylamine, l'éthanolamine, l'urée, la hexaméthylèntetramine.

10. Emploi des couches d'oxyde d'indium, dopées selon les revendications 1 à 9 en des affichages ou commes couches de chauffage ou de sensor.

## Claims

1. A process for producing transparent electrically conductive doped indium layers on a substrate, wherein a solution being produced by hydrolyzable compounds of indium and of at least one hydrolyzable compound of the dopant(s) is deposited on the substrate and the layer is formed by heating up to 500°C by tempering, characterized in that an indium oxide dip solution is used, already containing hydrolysed products of the hydrolyzable compounds of indium, and which dip solution contains as dopants at least one hydrolyzable compound of an element of main group I, IV, or V, of sub-groups I, II, IV, V, or VIII of the periodic system of elements or of the rare earths and that the substrate is dipped into the dip solution, removed from the dip solution and afterwards heated.

2. A process according to claim 1, characterized in that before heating up a drying process takes place.

3. A process according to claims 1 or 2, characterized in that, as indium oxide dip solution, an aqueous solution of the hydrolyzable compound of indium is used being treated with acetic acid or acetate.

4. A process according to claim 3, characterized in that said aqueous solution is additionally diluted by an alcohol.

5. A process according to claim 4, characterized in that said alcohol is ethanol.

6. A process according to one of the preceding claims, characterized in that dopants are the main group elements Mg, Ca, Si, Ge, Sn, Pb, Sb, Bi, As as well as the sub-group elements Cu, Ag, Au, Zn, Cd, Hg, Y, La, Ti, Zr, Hf, V, Nb, Ta, Fe, Ru, Os, Co, Rh, Ir, Ni, Pd, Pt, Ce, and Nd.

7. A process according to one of the preceding claims, characterized in that the layer being positioned upon the substrate is given a subsequent treatment after tempering by means of a reduction gas at temperatures of 200 to 500°C.

8. A process according to one of the preceding claims, characterized in that, as a hydrolyzable compound of indium, alkoxides, the nitrate, and salts of organic acids are used and, as compounds of the dopants, alkoxides, nitrates, chlorides, salts of organic acids and chelates are used.

9. A process according to one of the preceding claims, characterized in that to the indium oxide dip solution chelate forming compounds are added like acetylaceton, aceto-acetic ester, carbon acids, aldehydes, polyalcohols such as glycol or glycerol, polycarboxylic acids, ketones, hydroxy ketones or aliphatic or aromatic carbohydrates, aliphatic or aromatic amines such as pyridines, α-picoline, triethylamine, ethanolamine, urea, and urotropin.

10. Use of the doped indium oxide layers according to claims 1 to 9 in displays and as heating layers or sensor layers.